# EUROPEAN PATENT SPECIFICATION

(11) **EP 2 145 339 B1**
(45) Date of publication and mention of the grant of the patent: **20.06.2012**
(21) Application number: 07861114.2
(22) Date of filing: 18.12.2007
(51) Int. Cl.: G02B 6/44, G02B 6/48

(54) **ELECTRICAL CABLE WITH A TUBE FOR AN OPTICAL CABLE**
ELEKTRISCHES KABEL MIT EINER RÖHRE FÜR EIN OPTISCHES KABEL
CÂBLE ÉLECTRIQUE AVEC TUBE POUR CÂBLE OPTIQUE

(30) Priority: 04.05.2007 SE 0701096
(43) Date of publication of application: 20.01.2010
(73) Proprietor: Telefonaktiebolaget LM Ericsson (publ), 164 83 Stockholm (SE)
(72) Inventor: EFRAIMSSON, Lars, S-791 43 Falun (SE); STRÖM, Bengt, S-791 38 Falun (SE)
(74) Representative: Egrelius, Fredrik
(86) International application number: PCT/SE2007/051019
(87) International publication number: WO 2008/136722

(56) References cited:
- EP-A1- 0 347 971
- EP-A2- 1 411 378
- WO-A1-97/40504
- WO-A1-2004/006272
- JP-A- 3 172 808
- JP-A- 5 166 422
- JP-A- 58 199 306
- US-A- 4 859 025
- US-A- 4 935 170
- US-A- 5 902 958
- US-A- 5 902 962

## Description

### TECHNICAL FIELD

The present invention relates to an electrical cable with a tube for an optical cable.

### BACKGROUND

According to existing technology an electrical cable for power transmission can be combined with an optical cable into one and the same electrical cable. The combination can be performed in different ways and in a frequently used design the electrical cable is equipped with a tube of plastic. The tube can be arranged in a region between the insulated electrical conductors and the cable jacket. The optical cable is blown into the tube with air or floated into it with water when the electrical cable is already installed.

In the international application WO 97/40504 is described a self-supporting electrical cable with shield bands around the insulated electrical conductors, which bands efficiently protect the cable when it is suspended from fixed points. The cable could have been equipped with a tube in the mentioned region. The international application WO 2004/006272 describes an electrical cable with a shielding strip of partially electrically conducting material running along the cable in the region between the insulated electrical conductors and the cable jacket. An electrically conducting wire runs in the strip along its entire length and forms an efficient protection to switch off a cable voltage when the cable is penetrated by an electrically conducting object. Also in this cable a tube could have been arranged.

Cables of the above described type are well fitted for their purpose, but a problem arises if they are equipped with the tube for an optical cable. The tube can be deformed when the cable is manufactured or handled and the deformation makes it impossible to install the optical fiber. The deformation can take place e.g. when the cable is suspended by suspension equipment along the cable or is retained by strapping devices at the cable ends. A cable dredged into the ground can be deformed by stones and even a cable laid on the bottom of the sea can be subjected to forces deforming the tube. The tube can be made very strong so that it withstands the deforming forces. This has the drawback that the tube will be very stiff and all the cable will be rigid and very difficult to handle.

### SUMMARY

The invention is concerned with a problem that a tube for an optical cable or fiber integrated in an electrical cable can easily be deformed. The tube must be flexible so that the electrical cable will be easy to handle.

An object with the invention is thus to form an electrical cable with an integrated tube or tubes for an optical cable. The electrical cable is to be easy to handle and with still the tube/tubes is protected against deformation.

The problem is solved by an insulated electrical cable according to claim 1 with one or more tubes intended for optical cables. The electrical cable has at least two electrical conductors of metal, each surrounded by an electrically insulating layer and a jacket surrounding the electrical conductors and their electrically insulating layers. At least one strip of elastic material arranged in a region between the insulating layers of the electrical conductors and the inner side of the jacket. The tube is arranged in the strip and is surrounded by the elastic material. In a non deformed state the strip has a cross section with an outward side, facing the inner side of the jacket, which outward side follows a continuous outwardly bending curved line except for in an interval in proximity to the tube. In this interval the cross section outward side lies inside said curved line.

Optionally, in the interval the cross section outward side is flat and a further option is that the cross section outward side has an indentation. An option is also that the outwardly bending curved line is the circumference of a circle.

The electrical cable has the advantage that it is flexible and easy to handle and the tube for the optical cable is well protected against deformation. The electrical cable can be manufactured using standard equipment and the optical cable can easily be floated or blown into the tube when the electrical cable is already installed.

The invention will now be more closely described with the aid of embodiments and with reference to enclosed drawings.

### BRIEF DESCRIPTION OF THE DRAWINGS

Figure 1 shows a cross section of an electrical cable of well known type;
Figure 2 shows a view over suspension equipment;
Figure 3 shows a view over a strapping device;
Figure 4 shows a cross section of an electrical cable with a tube for an optical cable;
Figure 5 shows a cross section of an electrical cable with a tube for an optical cable according to the invention;
Figure 6 shows a cross section of a part of the cable in figure 5;
Figure 7 shows a cross section of a part of the cable in figure 5 acted on by a strapping device;
Figure 8 shows a cross section of an alternative embodiment of an inventive cable with a tube;
Figure 9 shows a cross section of still an alternative embodiment of an inventive cable with tubes; and
Figure 10 shows a cross section of the cable in figure 5 but equipped with extra layers.

### DETAILED DESCRIPTION

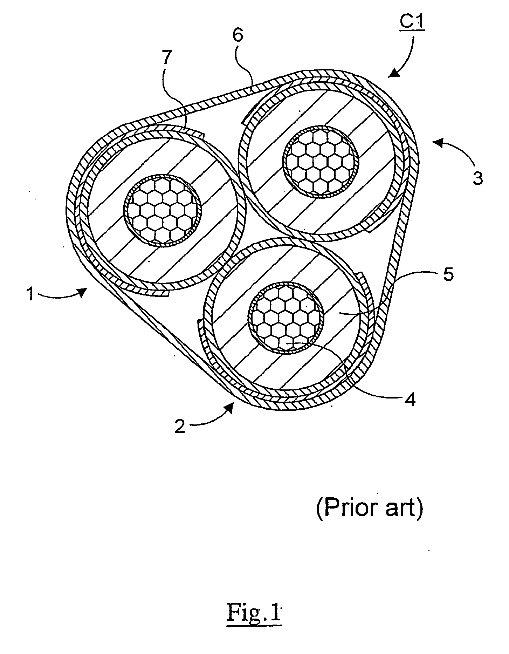

Figure 1 shows an electrical cable C1 of well known type. The cable has three insulated conductors 1, 2 and 3 each including a conductor 4 and an insulating layer 5. The cable is surrounded by a jacket 6 and has shield bands 7 on each of the insulated conductors between the insulating layer and the jacket.

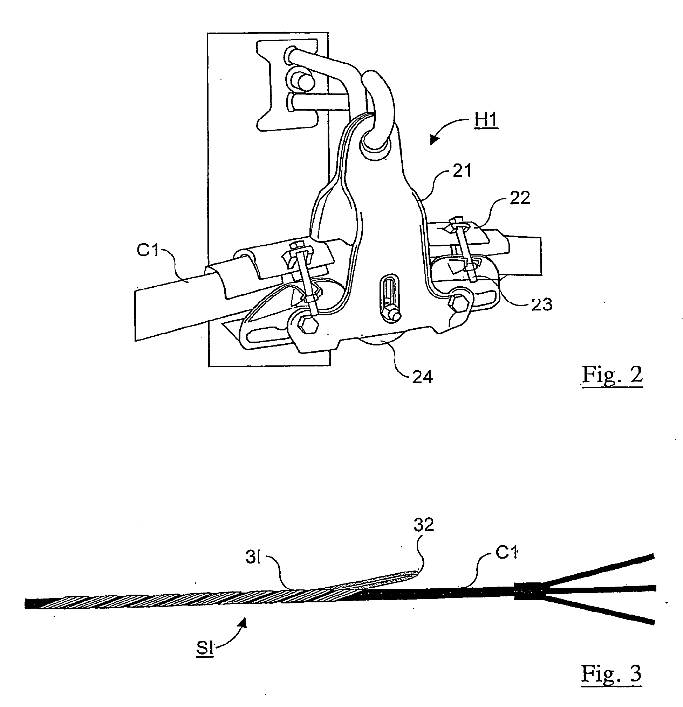

The electrical cable C1 can be suspended between poles using suspension equipment H1 as shown in figure 2. The suspension equipment has a holder 21 with clamps 22 tightened by bolts 23 for retaining the cable C1. The holder also has a wheel 24 on which the cable can roll when it is mounted. Figure 3 shows a strapping device S1 with resilient threads 31 turning spirally around the cable and fastened to a loop 32. An end of the cable C1 can be held by the strapping device and the cable can be stretched by pulling the loop 32. The threads then strap up around the cable and prevent it from sliding out of the strapping device S1.

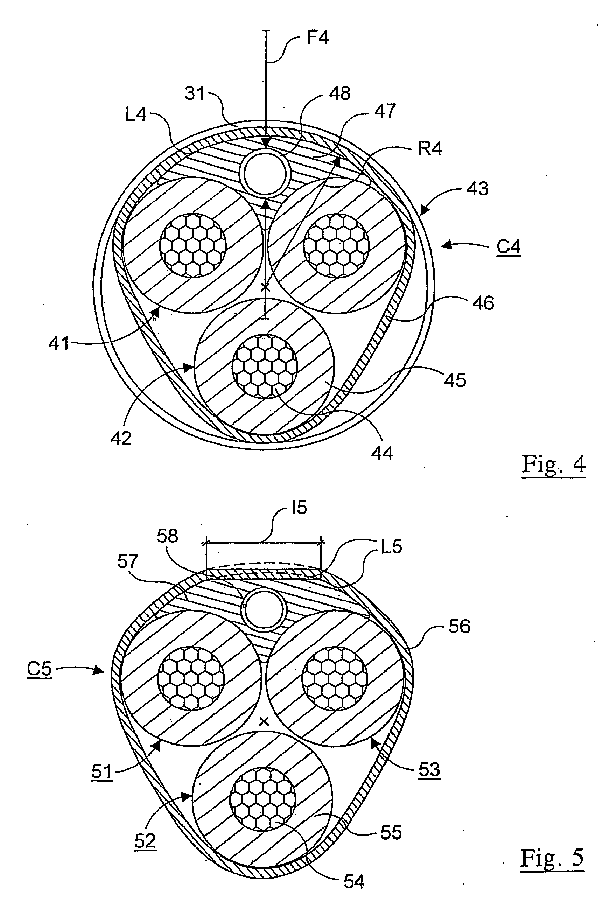

Figure 4 shows a cross section of an electrical cable C4 similar to the electrical cable C1. It has three insulated conductors 41, 42 and 43, each with an electrical conductor 44 and an insulating layer 45. The cable C4 has a surrounding jacket 46 and has also a plastic tube or duct 48 intended for an optical cable or equally an optical fiber. The tube is embedded in a strip 47 of elastic material, which strip runs along the cable in a region between the insulating layers 45 and the inner side of the jacket 46. When the electrical cable is uninfluenced from external forces the outward side of the strip 47 follows a continuous outwardly bending curved line L4 which is the circumference of a circle with a radius R4. The radius is defined by the diameter of the insulated conductors 41, 42 and 43. The threads 31 of the strapping device S1 surround the cable C4.

When the cable C4 is handled in different situations, e.g. suspended by the suspension equipment H1 or stretched by the strapping device S1, it will be subjected to radial forces F4. The forces can arise e.g. when the cable rolls over the wheel 24, the bolts 23 for the clamps 22 are tightened or when the cable is stretched by the strapping device S1. Although the tube 48 is embedded in the strip 47 the forces F4 from e.g. the threads 31 of the strapping device S1 can be big enough to deform the strip 47 and the tube 48 such that it will be impossible to blow or float an optical cable into the tube.

In figure 5 is shown a cross section of an electrical cable C5 which has tree insulated conductors 51, 52 and 53, each with an electrical conductor 54 and an insulating layer 55. The cable C5 has a surrounding jacket 56 and has also a plastic tube 58 intended for an optical cable. The tube is embedded in a strip 57 of elastic material, which strip runs along the cable C5 in a region between the insulating layers 55 and the inner side of the jacket 56. Different from the electrical cable C4 in figure 4 the outward side of the strip 57 in the cable C5 diverges from a continuous outwardly bending curved line L5 when the strip is not deformed. Instead the outward side of the strip 57 has an interval I5 in proximity to the plastic tube 58 that stretches inside the curved line L5. In the embodiment the outward side of the strip 57 is flat within the interval I5.

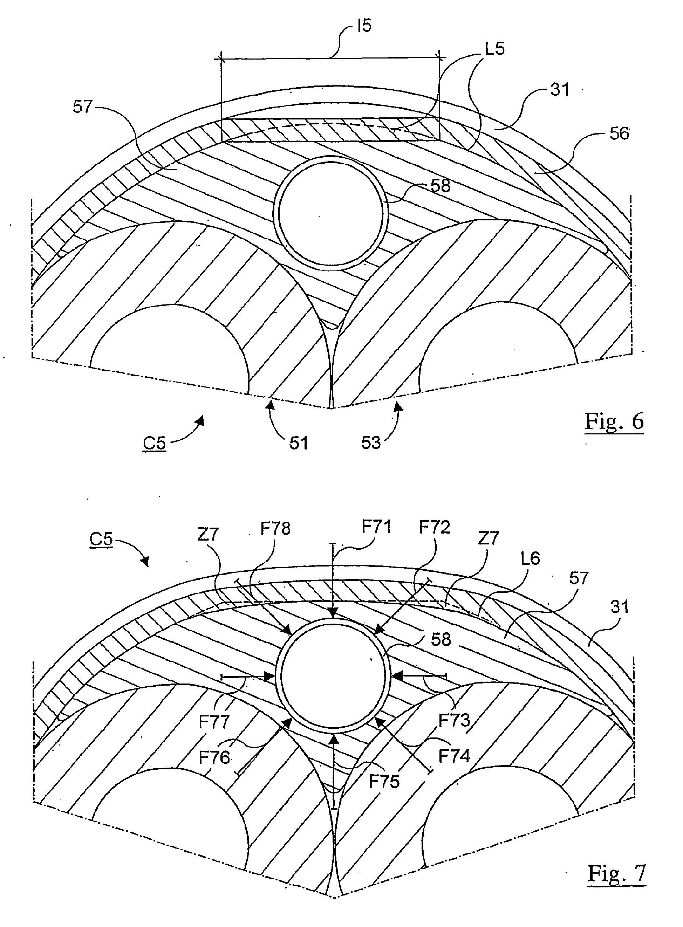

Figure 6 shows more in detail a part of the cross section of the cable C5 with the insulated conductors 51 and 53, the strip 57, the jacket 56 and the tube 58. The figure also shows the threads 31 of the strapping device S1. The cable is shown in a position when the strapping device is unloaded. The strip 57 is thus not deformed and in the interval I5 the strip has its flat shape.

Figure 7 shows the part of the cable cross section in figure 6 with the difference that the strapping device S1 is loaded. The strapping device is no longer fully circular, as it is shown in figure 6 and the strip 57 is deformed by the threads 31 of the strapping device. The position of the strip when not deformed is shown by a dashed line L6 defining deformation zones Z7. The pressure on the tube 58 is shown by force arrows F71-F78 indicating forces on the tube 58.

The form of the strip 57 with the flat interval I5 protects the tube 58 from being deformed in two different ways. Firstly the force from the threads 31 is more uniformly distributed over a wider range of the strip. The deformation zones Z7 of the strip 57 at the ends of the interval I5 will take up a bigger part of the load and a smaller part will influence the strip over the tube 58. The radial force F71 on the tube is therefore smaller than the force F4 shown in figure 4. Secondly the compression of the strip 57 in the deformation zones causes a pressure in the strip that gives rise to tangential forces, mainly the forces F73 and F77 and also the forces F72, F74, F76 and F78. The tangential forces stabilize the tube 58 and contribute to prevent it from collapsing. Thus, although the tube 58 is somewhat weak and flexible enough to let also the electrical cable C5 to be flexible, the tube 58 retains its form during the handling of the electrical cable.

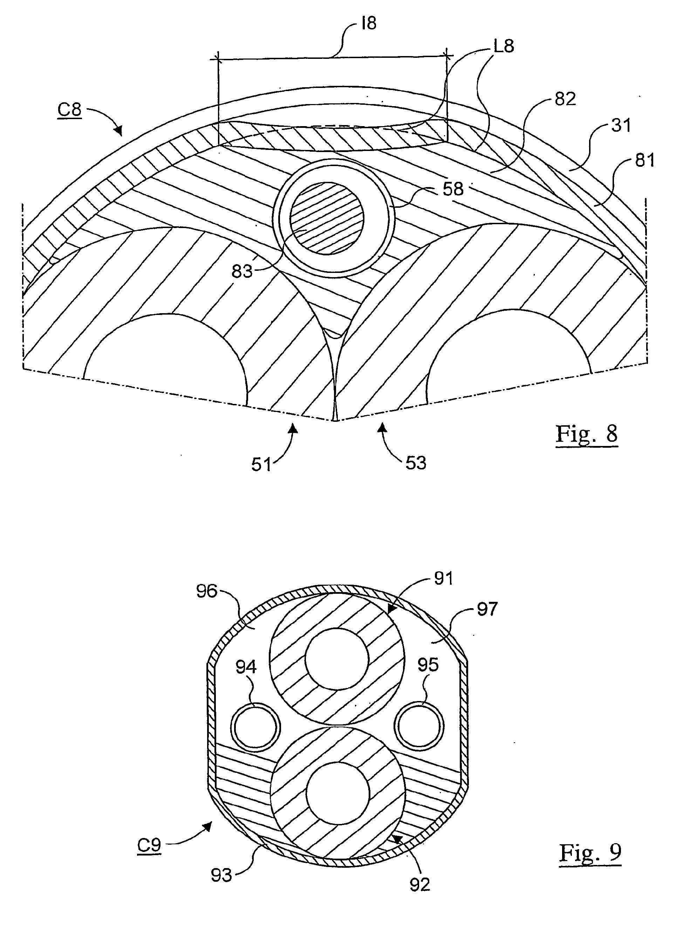

Figure 8 shows an electrical cable C8 with the insulated conductors 51 and 53. It has a jacket 81 and a strip 82 of elastic material, which runs along the cable in a region between the insulated layers of the insulated conductors and the inner side of the jacket. The tube 58 is embedded in the strip as in previous embodiments and also the thread 31 of the strapping device S1 is shown. In an interval I8 nearest to the tube 58 the outward side of the strip cross section stretches inside a continuous outwardly bending line L8. Different from the embodiment in figure 6 the cross section outward side in the interval I8 has an indentation. By adjusting the cross section of the strip it is possible to adjust the distribution of the forces on the tube 58. An optical cable (or fiber) 83 is shown in the tube 58.

In figure 9 is shown an electrical cable C9 with two insulated conductors 91, 92 surrounded by a jacket 93. The cable has two tubes (or ducts) 94, 95 for optical cables (or fibers). The tubes are embedded in each an elastic strip 96, 97 running along the electrical cable in regions between the insulated conductors and the inner side of the jacket. In intervals nearest to the tubes the outward side on each of the strips is flat in the same manner as is shown in figure 6.

Figure 5 shows the electrical cable C5 with three insulated conductors and the strip with the tube. Figure 9 shows the electrical cable C9 with two strips having each an embedded tube. Also electrical cables having four and even more insulated conductors and a plurality of strips with tubes are covered by the invention.

In connection with figure 7 is shown how the cable C5 and its elastic strip 57 is deformed by the threads 31 of the strapping device S1. The cables C8 and C9 can be deformed by the strapping device in a corresponding manner and the tubes 58, 94 and 95 are then protected by the respective elastic strip. The cables can as mentioned be subjected to deforming forces in other ways e.g. from the suspension equipment H1 or when the cable is dredged into the ground. The tubes are then protected from deformation in a way similar to what is described in connection with figure 7.

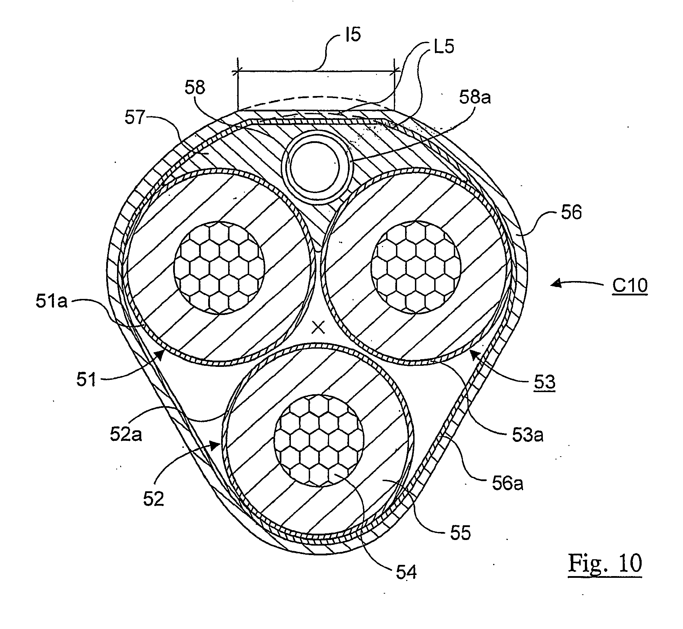

Electrical cables often have a number of layers for different purposes e.g. as appears from figure 1. The figures 4 to 9 are simplified and do not show such layers. In figure 10 on the other hand is shown an electrical cable C10 similar to the cable C5 of figure 5. The cable C10 has the insulated conductors 51, 52 and 53, the strip 57 with the tube 58 and the jacket 56. It also has electrically conducting layers 51a, 52a and 53a around the respective insulated conductor. An electrically conductive layer 56a surrounds the insulated conductors 51, 52 and 53 and the strip 57 and is in close contact with the inside of the jacket 56. If an electrically conducting object penetrates the cable C10 and comes into contact with the electrical conductors 54 a shortcut will arise and the voltage to the cable can be switched off. This effect is improved by making also the strip 57 of electrically conductive material. The tube 58 is surrounded by a sliding layer 58a, e.g. a smooth band. The layer 58a facilitates a movement between the tube and the surrounding strip 57, which contributes to that the tube will not be deformed when the cable C10 is bended. The layer 58a facilitates the removing of the strip from the tube 58 with less risk for damages on the tube. The cable is manufactured by traditional means, e.g. the strip 57 is extruded on the tube 58 with its sliding layer 58a. The strip is then placed between the conductors 51 and 53, the electrically conductive layer 56a is applied and the jacket 56 is extruded around it all.

## Claims

1. An insulated electrical cable with at least one tube (58) intended for an optical cable (83), the electrical cable (C5,C8) including:
- at least two electrical conductors (54) of metal, each surrounded by an electrically insulating layer (55) ;
- a jacket (56,61) surrounding the electrical conductors and their electrically insulating layers;
- at least one strip (57,82) or elastic material arranged in a region between the insulating layers (55) of the electrical conductors (54) and the inner sidle of the jacket (56,81),
wherein the tube (58) is arranged in the strip (57,82) and is surrounded by the elastic material,
**characterized in that** said at least one strip (57,82) in a non deformed state has a cross section with an outward side, facing the inner side of the jacket (56,81), that follows a continuous outwardly bending curved line (L5,L8) except for in an interval (I5,I8) in proximity to the tube (58) where the cross section outward side stretches inside said curved line, and is flat or has an indentation.

2. An insulated electrical cable according to claim 1, wherein the electrical cable (C5) has three insulated electrical conductors (51, 52, 53).

3. An insulated electrical cable according to claim 1 or 2, wherein the curved line (L5,L8) is the circumference of a circle with a radius (R4) that is determines by the diameter of the insulated electrical conductors (51, 52, 53).

4. An insulated electrical cable according to claim 1, 2 or 3, wherein the strip (57, 82, 96, 97) is of electrically conductive material.

5. An insulated electrical cable according to claim 1, 2, 3 or 4, wherein the tube (58) is surrounded by a sliding layer (58a).

## Patentansprüche

1. Isoliertes elektrisches Kabel mit mindestens einem Rohr (58), das für ein optisches Kabel (83) gedacht ist, wobei das elektrische Kabel (C5, C8) umfasst:
- mindestens zwei elektrische Leiter (54) aus Metall, wobei ein jeder durch eine elektrisch isolierende Schicht (55) umgeben ist;
- eine Hülle (56, 81), die die elektrischen Leiter und ihre elektrisch isolierenden Schichten umgibt;
- mindestens einen Streifen (57, 82) aus elastischem Material, der in einem Bereich zwischen den isolierenden Schichten (55) der elektrischen Leiter (54) und der Innenseite der Hülle (56, 81) angeordnet ist,
wobei das Rohr (58) im Streifen (57, 82) angeordnet ist und vom elastischen Material umgeben wird,
**dadurch gekennzeichnet, dass** der mindestens eine Streifen (57, 82) in einem nicht verformten Zustand einen Querschnitt mit einer Außenseite aufweist, die zur Innenseite der Hülle (56, 81) hin liegt, wobei er einer kontinuierlich nach außen biegenden gekrümmten Linie (L5, L8) folgt, außer in einem Bereich (15, 18) in unmittelbarer Nähe zum Rohr (58), wo sich die Außenseite des Querschnittes innerhalb der gekrümmten Linie dehnt und flach ist oder eine Vertiefung aufweist.

2. Isoliertes elektrisches Kabel nach Anspruch 1, wobei das elektrische Kabel (C5) drei isolierte elektrische Leiter (51, 52, 53) aufweist.

3. Isoliertes elektrisches Kabel nach Anspruch 1 oder 2, wobei die gekrümmte Linie (L5, L8) der Umfang eines Kreises mit einem Radius (R4) ist, der durch den Durchmesser der isolierten elektrischen Leiter (51, 52, 53) bestimmt wird.

4. Isoliertes elektrisches Kabel nach Anspruch 1, 2 oder 3, wobei der Streifen (57, 82, 96, 97) aus einem elektrisch leitenden Material besteht.

5. Isoliertes elektrisches Kabel nach Anspruch 1, 2, 3 oder 4, wobei das Rohr (58) durch eine Gleitschicht (58a) umgeben ist.

## Revendications

1. Câble électrique isolé, comportant au moins un tube (58) destiné à un câble optique (83), le câble électrique (C5, C8) englobant :
au moins deux conducteurs électriques (54) composés de métal, chacun étant entouré par une couche à isolation électrique (55) ;
une gaine (56, 81) entourant les conducteurs électriques et leurs couches à isolation électrique ;
au moins une bande (57, 82) de matériau élastique, agencée dans une région entre les couches à isolation (55) des conducteurs électriques (4) et le côté interne de la gaine (56, 81) ;
le tube (58) étant agencé dans la bande (57, 82) et étant entouré par le matériau élastique ;
**caractérisé en ce que** ladite au moins une bande (57, 82) présente, dans un état non déformé, une section transversale avec un côté externe, faisant face au côté interne de la gaine (56, 81), suivant une ligne courbée à fléchissement continu vers l'extérieur (L5, L8), à l'exception d'un intervalle (15,18) à proximité du tube (58), où le côté externe de la section transversale s'étend vers l'intérieur de ladite ligne courbée et s'avère plat ou comporte un renfoncement.

2. Câble électrique isolé selon la revendication 1, dans lequel le câble électrique (C5) comporte trois conducteurs électriques isolés (51, 52, 53).

3. Câble électrique isolé selon les revendications 1 ou 2, dans lequel la ligne courbée (L5, L8) constitue la circonférence d'un cercle, avec un rayon (R4) déterminé par le diamètre des conducteurs électriques isolées (51, 52, 53).

4. Câble électrique isolé selon les revendications 1, 2 ou 3, dans lequel la bande (57, 82, 96, 97) est composée d'un matériau conducteur d'électricité.

5. Câble électrique isolé selon les revendications 1, 2, 3 ou 4, dans lequel le tube (58) est entouré par une couche coulissante (58a).
